# EUROPÄISCHE PATENTANMELDUNG

(11) **EP 0 538 730 A1**
(43) Veröffentlichungstag der Anmeldung: **28.04.1993**
(21) Anmeldenummer: 92117585.7
(22) Anmeldetag: 15.10.1992
(51) Int. Cl.: C08J 11/08

(54) **Verfahren zur Aufbereitung von insbesondere Polyethylen-Verbundfolien, zu wiederverwendbaren Rohstoffen**

(30) Priorität: 23.10.1991 DE 4134889
(71) Anmelder: Nordenia Verpackungswerke GmbH, D-49439 Steinfeld (DE)
(72) Erfinder: Brauer, Jochen, W-2842 Lohne (DE); Lorenz, Arnulf, W-2842 Lohne (DE)
(74) Vertreter: Jabbusch, Wolfgang, Dr.Jur. Jabbusch, Wehser & Lauerwald Patentanwälte

(57) **Zusammenfassung**

Zur Aufbereitung von Polyolefin enthaltenden gebrauchten Gegenständen zu wiederverwertbaren Rohstoffen, insbesondere zur Aufbereitung von aus Polyethylen-Verbunden bestehenden Gegenständen, vorzugsweise Verbundfolien für Verpackungszwecke, mit mehreren Schichten, von denen wenigstens eine erste Schicht aus Polyethylen und mindestens eine zweite Schicht aus gleichem, gleichartigem Polyethylen, einem anderen Polymer oder anderem Werkstoff z.B. Aluminium, besteht, werden die gebrauchten Gegenstände zerschnitzelt und die Schnitzel unter intensiver Bewegung in wenigstens einem ein organisches Lösungsmittel enthaltenden Lösungsmittelbad der Lösungsmitteleinwirkung ausgesetzt. Bei Verbunden mit einem Haftvermittler zwischen den einzelnen Schichten des Verbundes, der aus höherprozentigen Co- oder Terpolymeren des Polyethylens mit Acrylsäure und deren Derivaten, sowie höherprozentigen Ethylenvinylacetat-Copolymeren besteht, wird ein Lösungsmittel verwendet, das den Haftvermittler zum Anquellen bringt, wie z.B. niedrig siedende Essigsäureester.

## Beschreibung

Die Erfindung betrifft ein Verfahren zur Aufbereitung von Polyolefin enthaltenden gebrauchten Gegenständen zu wiederverwertbaren Rohstoffen, insbesondere zur Aufbereitung von aus Polyethylen-Verbunden bestehenden Gegenständen, vorzugsweise Verbundfolien für Verpackungszwecke, mit mehreren Schichten, von denen wenigstens eine erste Schicht aus Polyethylen und mindestens eine zweite Schicht aus gleichem, gleichartigem Polyethylen, einem anderen Polymer oder anderem Werkstoff, z.B. Aluminium, besteht.

Polyethylen ist ein thermoplastischer Kunststoff, der wiederholt aufschmelzbar und deshalb für eine Wiederaufbereitung bevorzugt geeignet ist.

Polyethylen-Verbunde, z.B. Verbundfolien für Verpackungszwecke, die eine Schicht aus Polyethylen und eine Schicht aus Aluminium aufweisen, sind jedoch nur dann wieder aufarbeitbar, wenn die unterschiedlichen Werkstoffe der Schichten vorher voneinander getrennt werden.

Der Erfindung liegt die Aufgabe zugrunde, ein Verfahren zu finden, mit welchem sich Polyethylen-Verbunde trennen und somit zu wiederverwendbaren Rohstoffen aufarbeiten lassen.

Diese Aufgabe ist erfindungsgemäß dadurch gelöst, daß die gebrauchten Gegenstände zerschnitzelt werden und daß die Schnitzel unter intensiver Bewegung in wenigstens einem ein organisches Lösungsmittel enthaltenden Lösungsmittelbad der Lösungsmitteleinwirkung ausgesetzt werden.

Bei der Herstellung von Verbunden aus unterschiedlichen Werkstoffen werden zwischen den einzelnen Schichten des Verbundes Haftvermittler ebenfalls schichtweise angeordnet. Das Waschen der Schnitzel unter intensiver Bewegung in einem Lösungsmittelbad bewirkt, daß die Haftvermittlerschichten vom Lösungsmittel angegriffen werden, bis die Schichtenhaftung aufgehoben ist. Durch die Zerschnitzelung wird an den Schnittflächen ein größerer Flächenbereich der Haftvermittler freigelegt und dem Angriff der Lösungsmittel zugänglich gemacht. Bei gebrauchten Gegenständen aus Verbunden mit einem Haftvermittler zwischen den einzelnen Schichten des Verbundes, der aus höherprozentigen Co- oder Terpolymeren des Polyethylens mit Acrylsäure und deren Derivaten sowie höherprozentigen Ethylenvinylacetat-Copolymeren besteht, wird nach einer Weiterbildung der Erfindung ein Lösungsmittel verwendet, daß den Haftvermittler zum Anquellen bringt. Lösungsmittel, die die angestrebte Wirkungsweise bei Gegenständen aus vorgenannten Typen von Polyethylen-Verbunden aufweisen, sind niedrig siedende Essigsäureester, wie Ethylacetat und Isopropylacetat, sowie aliphatische Ether wie Propylenglykolmonomethylether. Dabei ist die Effektivität hinsichtlich der Verbundauftrennung von Isopropylacetat gegenüber Ethylacetat und dem Ether wirkungsvoller. Das Lösungsmittel bringt den Haftvermittler zum anquellen, wodurch die Schichtenhaftung aufgehoben wird. Aufgrund der intensiven Bewegung im Lösungsmittelbad trennen sich die Schichten aus Polyethylen und z.B. Aluminium.

Die Effektivität der Lösungsmittel wird nach einer zweckmäßigen Weiterbildung auch dadurch gesteigert, daß das Lösungsmittel im Lösungsmittelbad auf einer seiner Siedetemperatur entsprechenden Temperatur gehalten wird.

Das erfindungsgemäße Verfahren hat über die Aufhebung der Schichtenhaftung bei Polyethylen-Verbunden hinaus auch noch den Vorteil, daß an den gebrauchten Gegenständen anhaftende Druckfarben abgelöst werden. Dies erfolgt insbesondere aufgrund der intensiven Bewegung in der Wärme des Lösungsmittelbades.

In Abhängigkeit von der Intensivität der Bewegung der Schnitzel im Lösungsmittelbad kann z.B. bereits nach 15 min. ein vollständiges Ablösen der Druckfarben erreicht werden. Die Schnitzel werden zweckmäßigerweise vom stark mit Druckfarben beladenen Lösungsmittel abgetrennt und, damit eine Rückverfärbung vermieden wird, mit frischem Lösungsmittel beaufschlagt. In dem frischen Lösungsmittel verbleiben die Schnitzel eine vorbestimmte Verweilzeit. Eine Reaktionszeit von 3 bis 8 Stunden bei ca. 80 bis 85°C unter weiterhin intensiver Bewegung führt zu einer Auftrennung der Schichtenhaftung des Verbundes. Der Zeitbedarf ist abhängig von der Art und dem Aufbau des Verbundes. Gleichzeitig erfolgt mit besonderem Vorteil eine Extraktion der insbesondere im Polyethylen enthaltenen Zuschlagstoffe und PE-Wachse. Zuschlagstoffe, wie Antistatika, Gleitmittel, Thermo- oder UV-Stabilisatoren und dergleichen, die in unbekannten Mengen und Kombinationen im Polyethylen vorliegen, verschlechtern die Gebrauchseigenschaften des aus Polyethylenfolien gewinnbaren Recyclingproduktes. Dies gilt auch für die im Polyethylen, das zu Folie verarbeitet wurde, enthaltenen Abbaustoffe, die unpolaren PE-Wachse, die während der Lebensdauer einer Folie durch Wärme-, Licht- und Wettereinwirkung entstehen. Die Zuschlagstoffe und Abbaustoffe werden aus den Polyethylenteilen eines Verbundes durch das intensive Waschen im Lösungsmittel herausgelöst. Gleichzeitig wird ein Auftrennen des Verbundes zwischen Polyethylenbestandteilen und insbesondere metallischen Bestandteilen, wie z.B. Aluminium, bewirkt.

Die nach Beendigung der Verweilzeit im Lösungsmittelbad vorliegenden Verbundbestandteile Polyethylen und z.B. Aluminium werden vom Lösungsmittel abgetrennt, das Restlösungsmittel abgedampft, und aufgrund des Dichteunterschiedes können die Bestandteile z.B. über eine Schwimmseparierung oder mit Zentrifugen voneinander separiert und getrennt einer Weiterverarbeitung, z.B. einer Verarbeitung zu Recyclingprodukten, zugeführt werden.

Während der Verweilzeit der Schnitzel von PE-Verbunden ist es auch möglich, das Lösungsmittel anteilig bzw. durch kontinuierlichen Umlauf mit Zwischenreinigung des Lösungsmittels zu erneuern, um einer Rückverfärbung der Polyethylenbestandteile durch bereits abgelöste Druckfarben entgegenzuwirken.

Selbstverständlich lassen sich auch Verbundfolien nach dem erfindungsgemäßen Verfahren aufbereiten, die aus zwei oder mehr Schichten aus Polyethylenwerkstoff bestehen, die jeweils durch Haftvermittler aneinander gebunden sind.

Ein Ausführungsbeispiel ist in der Zeichnung dargestellt. Es zeigen:
- Fig. 1: ein Schnitzelteil stark vergrößert in einer Schnitt ansicht und
- Fig. 2: eine schematische Skizze des Verfahrensablaufes.

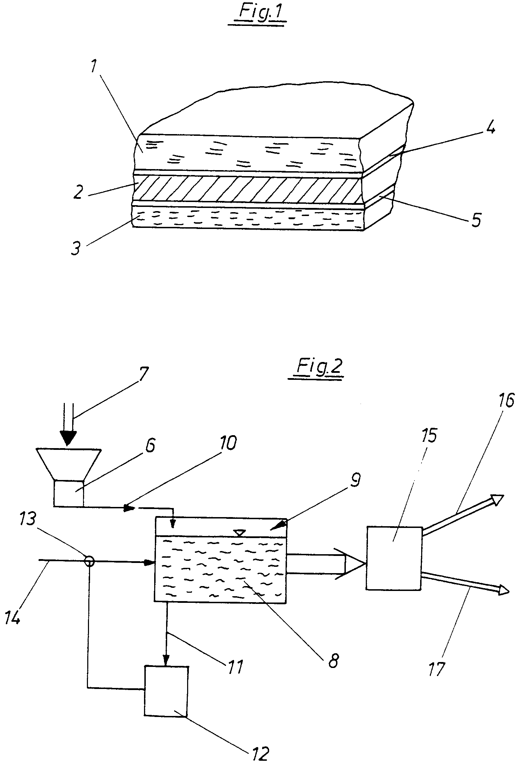

Fig. 1 zeigt ein Schnitzelteil, das durch Zerschnitzeln einer gebrauchten Verbundfolie aus Polyethylen für Verpackungszwecke entstanden ist. Die Verbundfolie und somit auch das Schnitzelteil besteht aus einer ersten Schicht 1 aus Polyethylen, einer zweiten Schicht 2 aus Aluminium sowie einer dritten Schicht 3, wieder aus Polyethylen. Die Schichten 1 und 3 sind mit der Schicht 2 über jeweils aufgebrachte Haftvermittler 4 und 5 miteinander verbunden. Als Haftvermittler werden bei derartigen Verbundfolien besonders vorteilhaft höherprozentige Co- oder Terpolymere des Ethylens mit Acrylsäure und deren Derivaten, sowie höherprozentige Ethylenvinylacetate verwendet.

Werden die Schnitzel in ein Lösungsmittelbad eingegeben, liegen die Schichten aus Haftvermittler 4 und 5 an den Schnittkanten eines Schnitzels relativ großflächig vor, so daß ein Angriff des Lösungsmittels stattfinden kann. Nach einer vorbestimmten Einwirkzeit quellen die Haftvermittler 4 und 5 an, wodurch die Schichtenhaftung zwischen den Schichten 1,2,3 aufgehoben wird.

Fig. 2 zeigt eine schematische Ansicht des Verfahrensablaufs. In einer Schnitzelstation 6 werden von oben, wie durch den Pfeil 7 angedeutet, gebrauchte Verbundfolien für Verpackungszwecke zugegeben und zerschnitzelt. Die Schnitzel werden in ein Lösungsmittel 8 enthaltendes Lösungsmittelbad 9 eingegeben, wie es schematisch durch den Pfeil 10 angedeutet ist. Im Lösungsmittelbad 9, in welchem das Lösungsmittel 8 auf seiner Siedetemperatur durch Zufuhr von Wärme gehalten wird, werden die Schnitzel intensiv bewegt, beispielsweise durch ein mechanisches Rührwerk oder durch Erzeugung von verwirbelnden Strömungen.

Durch die intensive Bewegung werden Druckfarben angelöst, abgerieben und letztlich vollständig abgelöst, bzw. entfernt. Die Farbbestandteile verunreinigen das Lösungsmittel und könnten zu Rückverfärbungen der Polyethylenbestandteile der einzelnen Schnitzel führen. Um dieser Rückverfärbung entgegenzuwirken, kann das Lösungsmittel wenigstens zum Teil abgezogen werden (Pfeil 11) und in einer Reinigungsstation 12 gereinigt werden. Das gereinigte Lösungsmittel kann über eine Mischeinrichtung 13 entweder in Richtung des Pfeiles 14 aus einem nicht weiter dargestellten Vorratstank zugeführten frischen Lösungsmittel beigemischt und in das Lösungsmittelbad 9 zurückgeleitet oder kontinuierlich direkt wieder in das Lösungsmittelbad 9 zurückgeführt werden.

Selbstverständlich ist es auch möglich, die Schnitzel aus mit Druckfarben verunreinigtem Lösungsmittel herauszunehmen und in ein zweites Lösungsmittelbad bzw. weitere Lösungsmittelbäder mit frischem Lösungsmittel zu überführen.

Sobald das Lösungsmittel ein Anquellen der Haftvermittlerschichten 4 und 5 in jedem Schnitzel bewirkt hat, liegen die Schnitzelteile aus Polyethylen und z.B. Aluminium, auch aufgrund der ständigen intensiven Bewegung, voneinander getrennt vor und können gemeinsam einer Separierstation 15 zugeführt werden. Wie durch die Pfeile 16 und 17 angedeutet, können die voneinander getrennten Schichtteile von Polyethylen-Verbunden getrennt einer Weiterverarbeitung zugeführt werden.

## Patentansprüche

1. Verfahren zur Aufbereitung von Polyolefin enthaltenden gebrauchten Gegenständen zu wiederverwertbaren Rohstoffen, insbesondere zur Aufbereitung von aus Polyethylen-Verbunden bestehenden Gegenständen, vorzugsweise Verbundfolien für Verpackungszwecke, mit mehreren Schichten, von denen wenigstens eine erste Schicht aus Polyethylen und mindestens eine zweite Schicht aus gleichem, gleichartigem Polyethylen, einem anderen Polymer oder anderem Werkstoff, z.B. Aluminium, besteht,
dadurch gekennzeichnet,
daß die gebrauchten Gegenstände zerschnitzelt werden und daß die Schnitzel unter intensiver Bewegung in wenigstens einem ein organisches Lösungsmittel (8) enthaltenden Lösungsmittelbad (9) der Lösungsmitteleinwirkung ausgesetzt werden.

2. Verfahren nach Anspruch 1, dadurch gekennzeichnet, daß bei gebrauchten Gegenständen aus Polyethylen-Verbunden, mit einem Haftvermittler (4,5) zwischen den einzelnen Schichten (1,2,3) des Verbundes, der aus höherprozentigen Co- oder Terpolymeren des Polyethylens mit Acrylsäure und deren Derivaten sowie höherprozentigen Ethylenvinylacetat-Copolymeren besteht, ein Lösungsmittel (8) verwendet wird, das den Haftvermittler (4,5) zum Anquellen bringt.

3. Verfahren nach einem der Ansprüche 1 und 2, dadurch gekennzeichnet, daß als Lösungsmittel (8) niedrig siedende Essigsäureester verwendet werden.

4. Verfahren nach einem der Ansprüche 1 und 2, dadurch gekennzeichnet, daß als Lösungsmittel (8) aliphatische Ether verwendet werden.

5. Verfahren nach einem der vorhergehenden Ansprüche, dadurch gekennzeichnet, daß das Lösungsmittel (8) im Lösungsmittelbad (9) auf einer seiner Siedetemperatur entsprechenden Temperatur gehalten wird.

6. Verfahren nach Anspruch 5, dadurch gekennzeichnet, daß die Schnitzel nach einer vorbestimmten Verweildauer im Lösungsmittelbad (9) vom Lösungsmittel (8) getrennt und anschließend mit frischem Lösungsmittel (8) beaufschlagt werden.

7. Verfahren nach Anspruch 5, dadurch gekennzeichnet, daß das Lösungsmittel (8) während der Verweildauer zum Teil abgezogen und der abgezogene Teil durch Zugabe von frischem Lösungsmittel (8) ersetzt wird.

8. Verfahren nach Anspruch 5, dadurch gekennzeichnet, daß das Lösungsmittel (8) während der Verweildauer aus dem Lösungsmittelbad (9) kontinuierlich abgezogen, gereinigt und wieder zugeführt wird.

9. Verfahren nach einem der vorhergehenden Ansprüche, dadurch gekennzeichnet, daß die nach Beendigung der Verweildauer im Lösungsmittel (8) vorliegenden Schichtteile (1,2,3) von Polyethylen-Verbunden vom Lösungsmittel (8) abgetrennt, und sodann voneinander separiert und getrennt einer Weiterverarbeitung zugeführt werden.
